# EUROPEAN PATENT APPLICATION

(11) **EP 4 624 081 A1**
(43) Date of publication of application: **01.10.2025**
(21) Application number: 24167329.2
(22) Date of filing: 28.03.2024
(51) Int. Cl.: B23C 5/20, B23B 27/14, B23C 5/06, B22F 5/00

(54) **CUTTING TOOL**

(71) Applicant: WALTER AG, 72072 Tübingen (DE)
(72) Inventor: BOEHNKE, David, 72072 Tûbingen (DE)
(74) Representative: Sandvik

(57) **Abstract**

The present invention relates to a cutting tool for metal cutting comprising a tool holder (1) having a holder body provided with an insert seat, which insert seat (2) comprises an abutment surface (13), and a cutting insert (3) removably received in the insert seat. The cutting insert has an overall geometry defined by a top surface (6), a bottom surface (7) and a circumferential side surface (8) connecting the top surface (6) and the bottom surface (7), A top edge (9) is formed at the intersection of the top surface (6) with the side surface (8), wherein at least a portion of the top edge (9) constitutes a top cutting edge (12). A bottom edge (10) is formed at the intersection of the bottom surface (7) with side surface (8). The side surface comprises a support surface, which support surface is in contact with the abutment surface (13) in a contact area (15), wherein the contact area (15) has a top limit at a top edge side and a bottom limit at a bottom edge side. An elongated groove (16) is arranged in the contact area, which groove has a top end (17) and extends downward toward the bottom surface (7) from the top end (17). The groove (16) extends across the contact area (15) and intersects the top limit and the bottom limit of the contact area (15), and the top end (17) of the groove (16) is located at a distance (20) of at least 0,3 mm from the top cutting edge (12).

## Description

### Technical field

The present invention relates to a cutting tool for metal cutting comprising a tool holder and a cutting insert. The tool holder has a holder body provided with an insert seat, which insert seat comprises an abutment surface. The cutting insert is removably received in the insert seat.

### Background

A conventional method for producing a cutting insert for metal cutting is to form a green body by compressing a powder in a press tool using multiaxial pressing. Known press tools for multiaxial pressing comprise an upper punch, a lower punch and a die, which die comprises two or more movable sliders. During pressing, powder sometimes leak out between each two of the sliders, which may form press burr on the green body. Remnants from such press burr is typically still present after sintering of the green body. Therefore, sintered green bodies are conventionally subjected to cumbersome grinding to remove the press burr remnants.

JP 10094899 discloses a polygonal cutting insert produced from a green body through multiaxial pressing. Where each two sliders of the three sliders of the disclosed press tool meet, the sliders are provided with a protruding bulge. Due to the bulge at each intersection, the green body is provided with corresponding grooves in corresponding locations. Furthermore, in each groove of the green body, there is press burr from powder leaked in between bulges of the sliders. In a cutting insert produced from this green body, press burr remnants are located in the groove such that the remnants do not protrude from the surface of the cutting insert. Thereby, no grinding away of press burr remnants is necessary. However, a problem with this known cutting insert is that the groove as such interferes with other features of the cutting insert, such as for example the cutting edge.

### Summary

It is an object of the present invention to at least partially obviate the above mentioned problem. This object is achieved according to the invention by means of a turning tool as defined in claim 1.

An inventive cutting tool for metal cutting comprises
- a tool holder having a holder body provided with an insert seat, which insert seat comprises an abutment surface, and
- a cutting insert removably received in the insert seat, which cutting insert has an overall geometry defined by a top surface, a bottom surface and a circumferential side surface (8) connecting the top surface and the bottom surface, wherein
   - a top edge is formed at the intersection of the top surface (6) with the side surface, wherein at least a portion of the top edge constitutes a top cutting edge,
   - a bottom edge is formed at the intersection of the bottom surface with side surface, and
wherein
- the side surface comprises a support surface, which support surface is in contact with the abutment surface in a contact area, wherein the contact area has a top limit at a top edge side and a bottom limit at a bottom edge side,
- an elongated groove is arranged in the contact area, which groove has a top end and extends downward toward the bottom surface from the top end,
- the groove extends across the contact area and intersects the top limit and the bottom limit of the contact area, and
- the top end of the groove is located at a distance of at least 0,3 mm from the top cutting edge.

The cutting insert of the present cutting tool comprises a surface with a groove, which groove allows any press burr remnants to be at least partly submerged below the surface. In contrast to the cutting insert disclosed in JP 10094899, the location and extension of the groove is carefully optimized in the cutting insert of the present cutting tool. Specifically, the groove starts at a distance from the cutting edge and extends across the contact area from a top limit to a bottom limit thereof. Thanks to the inventive groove in the contact are, complex grinding of press burr on the contact are while ensuring tolerances of the contact are itself, is avoided. Thanks to the distance between the groove and the cutting edge, the cutting edge is not affected by the groove. In conventional production processes, a sintered green body is grinded to form the final shape of the cutting edge, why any grinding away of press burr remnants in this area is done simultaneously with forming the cutting edge and hence does not significantly add time or costs to the production. Thus, the present cutting tool comprises a groove for hiding press burr, which groove has an extension and location that is optimized with respect to both accuracy of clamping and cutting.

The present cutting tool relates to a cutting tool for metal cutting, preferably chip removing machining. The cutting tool comprises a tool holder with a tool holder body and a cutting insert removably received in the tool holder. The present invention also relates to a cutting insert for use in the cutting tool. Optionally, the cutting tool is a milling tool, a turning tool, a drilling tool, or a boring tool. The cutting insert and tool holder typically are of a corresponding kind.

The tool holder comprises a holder body, which has an insert seat, for example one or several insert seats. A cutting tool in form of a milling tool may have several insert seats while a cutting tool in form of a turning tool may have one insert seat. According to an embodiment, the holder body has an axial length, wherein the insert seat/seats is/are at an axial front end of the tool holder. The tool holder optionally comprises a coupling section at an axial rear end for providing a mounting interface. Optionally, the mounting interface is designed to be coupled to a rotatable machine spindle or to an adapter for a rotatable machine spindle. Preferably, the coupling section is included in a shaft that is integral with the holder body.

Preferably, the cutting insert is produced from a green body by compacting a powder such as cermet, cemented carbide powder or a metallurgical powder. After the green body has been formed and removed from the press tool, it may be subjected to other treatments such as sintering, grinding, edge treatment and/or coating.

The cutting insert has an overall geometry defined by a top surface, a bottom surface and a circumferential side surface connecting the top surface and the bottom surface. As seen in a top view, the cutting insert is for example polygonal, such as triangular, square, pentagonal, or hexagonal. When pressing polygonal inserts, the press tool preferably is configured such that an upper punch forms the top surface, a lower punch the bottom surface and a die comprising two or more movable sliders the side surface. A press tool with a die comprising three or more sliders is typical referred to as multiaxial. Optionally, the split between the sliders is located on the polygonal sides, or at the corners.

A top edge is formed at the intersection of the top surface with the side surface, and a bottom edge is formed at the intersection of the bottom surface with side surface. At least a portion of the top edge constitutes a top cutting edge. As seen in the top view, the top edge typically outlines the overall shape of the cutting insert, for example the polygonal shape. Optionally, each side of the polygonal comprises one portion, or two separate, portions that constitutes the cutting edge. For example, two adjacent sides of a polygonal cutting insert meet at a corner, wherein a portion of the two adjacent sides together with the corner form the cutting edge.

According to an embodiment, the bottom edge corresponds to the top edge. Therein, the bottom edge comprises at least a portion which constitutes a bottom cutting edge.

The cutting edge is to be understood as a portion of the top edge/bottom that is used for cutting during normal operation in at last one position of the cutting insert in the tool holder. Other portions of the edge are not used as cutting edges during normal operation. Preferably the cutting insert is indexable. In indexable cutting insert, the top edge and/or the bottom edge preferably are symmetrical, for example have a rotational symmetry.

The insert seat comprises an abutment surface, and the cutting insert comprises a support surface. When the cutting insert is received in the insert seat, the support surface at least partially faces and contacts the abutment surface in a contact area. Preferably, the cutting insert is securely held in the insert seat by being pressed against the abutment surface. The cutting insert is held in the insert seat by any suitable means, such as for example a clamp or a screw.

The contact area is an area of the support surface which as a whole is designed and positioned for contact with the abutment surface, wherein specific contact for example occurs as line contact or in spots distributed over and within the contact area. The contact area has a top limit toward the top surface and a bottom limit toward the bottom surface. Optionally, the contact area has a first and second side limit toward each respective side. Optionally, the contact area is planar or curved. The abutment surface of the insert seat is a correspondingly shaped surface.

In the support surface of the side surface of the cutting insert, an elongated groove is arranged in the contact area. The groove extends downward from the top end toward the bottom surface. This is to be understood as the lengthwise extension of the groove. Preferably, the groove has also a bottom end.

The groove extends from the top end across the contact area and intersects both the top limit and the bottom limit of the contact area. Optionally, the top end of the groove is on the top limit and/or the bottom end is on the bottom limit.

Preferably, the lengthwise extension of the groove corresponds to the split between sliders in the press tool used to produce the green body of the cutting insert. The sliders are provided with a respective bulge along a portion of their contact line, wherein the two bulges together form a groove in the green body. The groove in the green body results in the elongated groove in the cutting insert.

The top end of the groove is located a distance of at least 0,3 mm from the top cutting edge. According to an embodiment with bottom cutting edge, the bottom end is located at a distance of at least 0,3 mm from the bottom cutting edge. Preferably, the distance is at least 0,8 mm. This ensures sufficient space between the cutting edge and the groove such that the groove does not interfere with the desired shape of the cutting edge.

Preferably, the cutting insert has a central plane between the top surface and the bottom surface.

Preferably, the top end is located in the support surface, wherein the distance is measured downward from to the cutting edge in a direction normal to the central plane. Alternatively, the top end is located on the top edge, wherein the distance is measured from the top end to an end point of the cutting edge perpendicular to the normal of the central plane.

Preferably, across the contact area, the extension of the groove is non-parallel to the central plane. Thereby the groove is kept as short as possible across the contact area. According to an embodiment, the lengthwise extension of the groove is normal to the central plane. Thereby advantageously the length of the groove is as short as possible. Optionally, an angle between the lengthwise extension of the groove and the normal is 0° - 70°. According to an embodiment, the groove extends with an angle of 30° - 60°. This is preferred in embodiments with cutting edges both at the top and bottom edge which are not aligned in the normal direction.

Preferably, the groove has a bottom surface, two side surfaces connecting the bottom surface and the contact area, and a depth from the bottom surface to the contact area. The side surfaces and the bottom surface extend in the lengthwise direction. As seen in a cross section, the side surface may be planar or curved. According to an embodiment, press burr remnant protrudes from the bottom surface less than the depth. Thereby, the groove ensures that not even minor pieces of press burr remnants protrude above the contact area in order to further improve contact with the abutment surface. According to an embodiment, the depth is 5 - 250 µm, which accounts for press burr remnants from most production methods. Preferably, the entire length of the groove has this depth.

According to an embodiment, as seen in a cross section, a width of the groove at the intersection of the side surfaces with the contact area is 25 - 1000 µm. Thereby, the groove is sufficiently wide to hide press burr remnants while at the same time not unnecessarily reducing the surface of the contact area. Preferably, the ratio between the depth and the width of the groove is 1:4.

Optionally, the side surface comprises a clearance surface or a rake surface of the top cutting edge. In other words, the support surface with the contact area optionally is a side support surface or a clamping surface.

### Brief description of the drawings

In the following, example embodiments will be described in greater detail and with reference to the accompanying drawings, in which:
Figs. 1 and 6 are a perspective views of a first embodiment of an inventive cutting tool for metal cutting in form of a milling tool;
Fig. 2 is a perspective view of a tool holder of the milling tool shown in Fig. 1;
Fig. 3 is a perspective view of a cutting insert of the milling tool shown in Fig. 1;
Fig. 4 is side view of the cutting insert of Fig. 3;
Fig. 5 is a cross section as indicated in Fig. 4 of a groove in a surface of the cutting insert;
Fig.7 is a cross section as indicated in Fig. 6, wherein the cutting insert is received in the insert seat;
Fig. 8 is an enlarged portion of the cross section of Fig. 7;
Figs. 9 and 10 show alternative embodiments of the cutting insert of Fig. 3.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

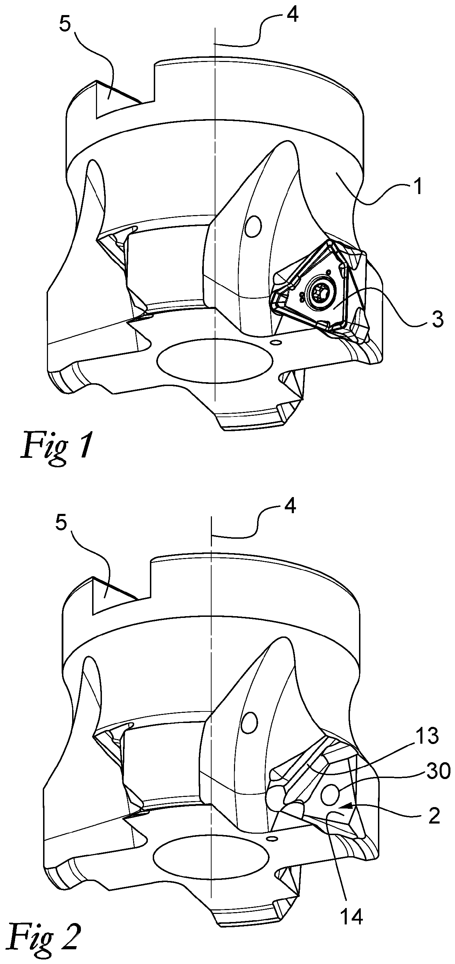

Fig. 1 shows a first embodiment of an inventive cutting tool for metal cutting in form of a milling tool. The milling tool is rotatable around a central axis 4. The milling tool comprises tool holder 1 having a holder body, which is provided with an insert seat 2. In the shown example embodiment, there are four identical insert seats 2 provided in an axial front end of the holder body. At an axial rear end, the holder body comprises a coupling section in form of a mounting interface 5, which is integral with the holder body. The mounting interface 5 is designed to couple the milling tool to a rotatable machine spindle via an adapter.

A cutting insert 3 is removably received in one of the insert seats 2. The cutting insert 3 is produced from cemented carbide powder. The powder is compressed in a press tool by multiaxial pressing to form a green body, the green body is then sintered, grinded and coated to form the cutting insert 3.

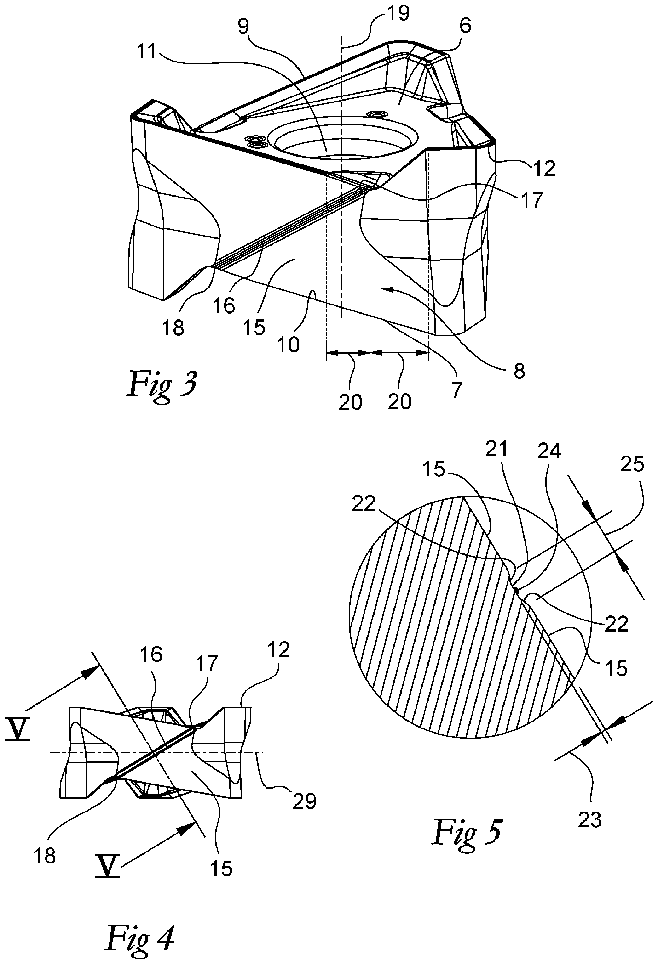

An enlarged, perspective view of the cutting insert 3 of the first embodiment of the cutting tool is shown in Fig. 3. The cutting insert 3 has a top surface 6, a bottom surface 7, and a circumferential side surface 8. The top surface 6 and the bottom surface 7 are identical. The cutting insert 3 has a central plane 29 halfway between the top surface 6 and the bottom surface 7, c.f. Fig. 4. A through hole 11 extends from an opening in the top surface 6 to an opening in the bottom surface 7. A central axis 19 of the through hole correspond to the normal direction of the central plane.

The cutting insert 3 is polygonal, and specifically, triangular as seen in a top view. A top edge 9 is formed at the intersection of the top surface 6 with the side surface 8, and a bottom edge 10 is formed at the intersection of the bottom surface 7 with side surface 8. A portion of the top edge constitutes a top cutting edge 12. Two adjacent triangular sides of a polygonal cutting insert 3 meet at a corner, wherein the portion that forms the cutting edge 12 is a portion of each the two adjacent sides together with the corner. The cutting edge 12 has been marked by a bold line in Figure 3. The cutting insert has a top cutting edge 12 at each corner. The bottom edge 10 corresponds to the top edge 9 and has corresponding cutting edges, which are not marked in the figures. Therein, the cutting insert 3 has a rotational symmetry around the central axis 19, wherein the cutting insert 3 is six times indexable in the insert seat 2. A portion of the side surface 8 which is closest to a respective cutting edge 12 forms a clearance surface.

As can be seen in Fig. 2, the insert seat 2 comprises an abutment surface 13, which is planar. The insert seat 2 comprises a main surface 14 for, depending on the index position, cooperating with either the top surface 6 or the bottom surface 7. A threaded hole 30 is arranged in the main surface 14 of the insert seat 2.

The side surface 8 comprises a support surface with a contact area 15, wherein in the present example embodiment the contact area 15 covers the entire support surface. Thus, the contact area 15 has a top limit at the top edge 9 and bottom limit at the bottom edge 10.

An elongated groove 16 is arranged in the contact area 15. The cutting insert 3 has one groove 16 in each of the three polygonal sides. The groove 16 has a top end 17 located on the top edge 6 and a bottom end 18 located on the bottom edge 9. In a lengthwise direction, the groove extends from the top end, downward across the contact area 15 toward the bottom surface 7 and to the bottom end 18. The lengthwise extension of the groove 16 is linear and non-parallel with the central plane. The groove extends with an angle of 45 ° to the central axis 19.

The top end is located a distance 20 of more than 0,8 mm from the top cutting edge 12 at each respective corner. The distance 20 is measured from the top end 17 to an end point of the cutting edge 12 perpendicular to the normal of the central plane.

The groove has a bottom surface 21, two side surfaces 22 connecting the bottom 21 surface and the contact area 15. A depth 23 of the groove 16 extends from the bottom surface 21 to the contact area 15. The depth is 125µm. As seen in the cross section of Fig. 5, the side surfaces 22 are curved. Press burr remnant 24 protrudes from the bottom surface 21 less than the depth 23 such that it is below the contact area 15. A width 25 of the groove is 500µm. Thus, the ratio between the depth and the width of the groove is 1:4.

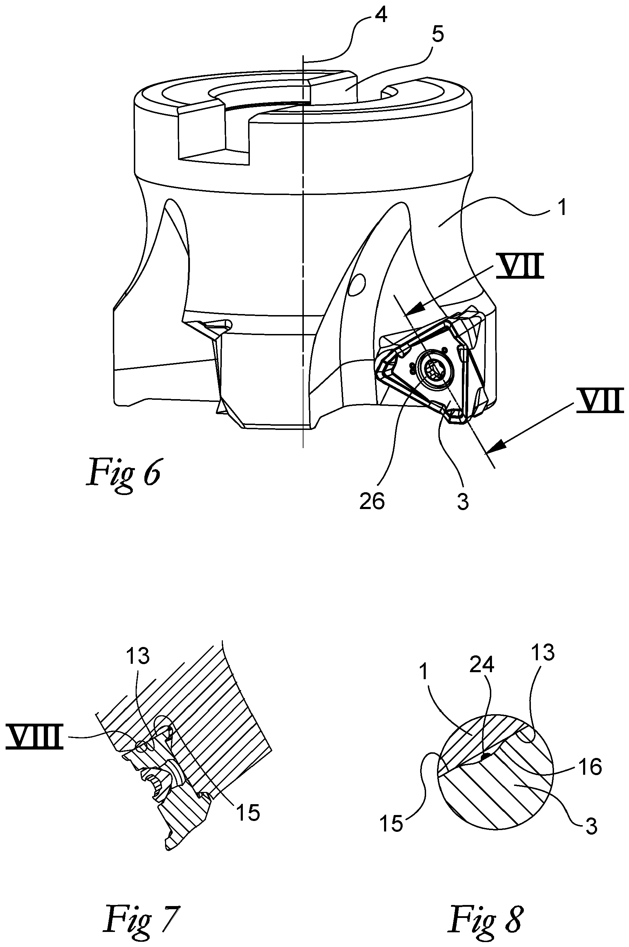

In Figs. 6 and 7, a cross section of the cutting tool wherein the cutting insert is received in the insert seat 2 of the holder body is shown. The cutting insert 3 is securely held in the insert seat 2 by means of a clamping screw 26 extending through the hole 11 in the cutting insert and into the threaded hole 30 in the insert seat 2. Therein, the clamping screw 26 forces the bottom surface 8 of the cutting insert 3 against the main surface 14 of the insert seat 2, and the contact area 15 of the support surface contacts the abutment surface 13 of the insert seat 2. The contact is in form of spots distributed over the contact are 15 depending on varying cutting forces during operation. As can be seen in Fig. 8, press burr remnant 24 is submerged in the groove 16 and does not contact the abutment surface 13. Thereby, the press burr remnant does not influence the clamping while at the same time the groove 16 is distanced from the cutting edge 12.

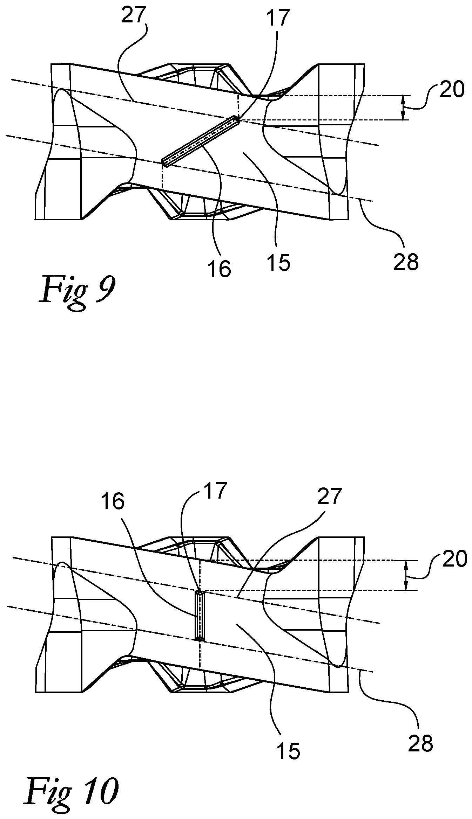

In Figs. 9-10 alternative embodiments of the cutting insert 3, which when mounted in a tool holder 1 provide alternative embodiments for the cutting tool. The embodiments differ only in the extension of the contact area 15 and the extension of the groove 16. The cutting insert 3 of the embodiments in Fig. 9 and 10 is intended to be mounted in an insert seat 2 with a smaller abutments surface 14, why the contact area 15 has a top limit 27 and a bottom limit 28. In both alternative embodiments, the top end 17 of the groove 16 is located on the top limit 27, and the bottom end 18 is located on the bottom limit 28. In the embodiment of Fig. 9, the groove 16 extends across the contact area at the same angle to the central axis 19 as in the first embodiment shown in Fig. 4. In the embodiment of Fig. 10, the groove 16 extends across the contact area in a direction normal to the central plane in the direction of the central axis 19.

## Claims

1. A cutting tool for metal cutting comprising
- a tool holder (1) having a holder body provided with an insert seat, which insert seat (2) comprises an abutment surface (13), and
- a cutting insert (3) removably received in the insert seat, which cutting insert has an overall geometry defined by a top surface (6), a bottom surface (7) and a circumferential side surface (8) connecting the top surface (6) and the bottom surface (7), wherein
- a top edge (9) is formed at the intersection of the top surface (6) with the side surface (8), wherein at least a portion of the top edge (9) constitutes a top cutting edge (12),
- a bottom edge (10) is formed at the intersection of the bottom surface (7) with side surface (8), and
wherein
- the side surface comprises a support surface, which support surface is in contact with the abutment surface (13) in a contact area (15), wherein the contact area (15) has a top limit at a top edge side and a bottom limit at a bottom edge side, and
- an elongated groove (16) is arranged in the contact area, which groove has a top end (17) and extends downward toward the bottom surface (7) from the top end (17),
**characterized in that**
- the groove (16) extends across the contact area (15) and intersects the top limit and the bottom limit of the contact area (15), and
- the top end (17) of the groove (16) is located at a distance (20) of at least 0,3 mm from the top cutting edge (12).

2. The cutting tool as claimed in any preceding claim, wherein the elongated groove extends downward toward the bottom surface to a bottom end, and at least a portion of the bottom edge constitutes a bottom cutting edge, wherein the bottom end is located at a distance (20) of at least 0,3 mm from the bottom cutting edge.

3. The cutting tool as claimed claim 2, wherein the distance (20) is at least 0,8 mm.

4. The cutting tool as claimed in any preceding claim, wherein the cutting insert has a central plane between the top surface and the bottom surface, wherein the distance (20) is measured in a direction normal to the central plane.

5. The cutting tool as claimed in any preceding claims, wherein, across the contact area, the extension of the groove is non-parallel to the central plane.

6. The cutting tool as claimed in any preceding claims, wherein the contact area is planar.

7. The cutting tool as claimed in any preceding claims, wherein the groove (16) has a bottom surface (21), two side surfaces (22) connecting the bottom surface (21) and the contact area (15), and a depth (23) from the bottom surface (21) to the contact area (15).

8. The cutting tool as claimed in claim 7, wherein press burr remnant (24) protrudes from the bottom surface less than the depth (23).

9. The cutting tool as claimed in any claim 7-8, wherein the depth is 5 - 250 µm.

10. The cutting tool as claimed in any preceding claims, wherein, as seen in a cross section, a width of the groove at the intersection of the side surfaces with the contact area is 25 - 1000 µm.

11. The cutting tool as claimed in any preceding claims, wherein the side surface comprises a clearance surface of the top cutting edge.

12. The cutting tool as claimed in any claim 1 - 10, wherein the side surface comprises a rake surface of the top cutting edge.

13. The cutting tool as claimed in any preceding claims, wherein
- the top surface is a polygon with a plurality of polygon sides,
- the side surface comprises one main side surfaces at each of the plurality of polygon sides,
- the cutting insert comprises a plurality of the support surfaces with the grooves, wherein each of the plurality of the support surfaces is arranged in a respective one of the main side surfaces.

14. A cutting insert for metal cutting for use in a cutting tool as claimed in any of the claims 1-13.
